# EUROPÄISCHE PATENTSCHRIFT

(11) **EP 0 597 320 B1**
(45) Veröffentlichungstag und Bekanntmachung des Hinweises auf die Patenterteilung: **28.08.1996**
(21) Anmeldenummer: 93117381.9
(22) Anmeldetag: 27.10.1993
(51) Int. Cl.: B01D 19/04, B01F 17/00

(54) **Schutzkolloid enthaltende Entschäumeremulsion**
Defoaming emulsion containing protective colloid
Emulsion antimoussante contenant un colloide protecteur

(30) Priorität: 09.11.1992 DE 4237754
(43) Veröffentlichungstag der Anmeldung: 18.05.1994
(73) Patentinhaber: Th. Goldschmidt AG, D-45127 Essen (DE)
(72) Erfinder: Keup, Michael, Dr., D-45130 Essen (DE); Klocker, Otto, D-45277 Essen (DE); Sucker, Roland, D-59368 Werne (DE)

(56) Entgegenhaltungen:
- DE-A- 1 914 684
- COSMETICS & TOILETRIES, Vol. 97, Nr. 3, MUrz 1982 W.B. SHAPIRO "Thickening Oil-In-Water Emulsions", Seiten 27-33

## Beschreibung

Entschäumeremulsionen sind Makroemulsionen, deren dispergierte Phase Teilchen aufweist, deren mittlere Größe über 100 µm liegen kann. Dabei besteht die innere Phase aus dem Entschäumerwirkstoff oder enthält ihn in einem Trägermedium, wie z. B. einem Lösungsmittel.

Als Entschäumerwirkstoffe kommen Öle verschiedenster Art in Frage, wie Organopolysiloxane, z. B. in Form von Siliconölen oder Polyoxyalkylen-Polysiloxan-Blockmischpolymerisaten, Polyether, pflanzliche oder tierische Öle, Paraffine oder Mineralöle. Dabei können in den Ölen feinteilige Feststoffe enthalten sein, welche die entschäumende Wirkung noch verstärken. Beispiel eines solchen geeigneten feinteiligen Feststoffes ist hochdisperse, meist pyrolytisch gewonnene Kieselsäure, die als Aerosil im Handel erhältlich ist und durch Behandlung mit Organosiliciumverbindungen hydrophobiert sein kann. Weitere geeignete Feststoffe sind feinteiliges Magnesium- und Aluminiumoxid.

In der DE-A-19 14 684 wird eine mit feinteiliger Kieselsäure versetzte Siliconentschäumeremulsion beschrieben, die noch einen zusätzlichen Gehalt von 10 bis 60 Gew.-% (bezogen auf Gesamtmenge Siloxan in der Emulsion) eines bestimmten Siloxans aufweist. Durch den Zusatz dieser Verbindungen wird die Stabilität der Emulsion erhöht und ihre entschäumende Wirkung verbessert.

Die Entschäumeremulsionen neigen infolge der relativ großen Teilchen in der dispersen Phase zu Sedimentation und Koaleszenz. Es ist deshalb erforderlich, die Emulsionen durch Zusatz geeigneter Hilfsstoffe, wie Schutzkolloide (Hydrokolloide) zu stabilisieren. Diese bewirken eine Viskositätssteigerung der Emulsionen, welche der Sedimentation entgegenwirkt. Außerdem können sich die Schutzkolloide an der Grenzfläche der dispersen Phase anlagern und diese sterisch stabilisieren, so daß Koaleszenz verhindert wird.

Als Schutzkolloide (Hydrokolloide) sind aus dem Stand der Technik zahlreiche Verbindungen bekannt. Es wird auf die Veröffentlichung von W. B. Shapiro 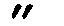 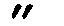 Thickening Oil-in-Water Emulsions" in Cosmetics & Toiletries 97 (1982), 27 ff. verwiesen.

Beispiele solcher Schutzkolloide sind Cellulosederivate, wie Methylcellulose, Carboxymethylcellulose, Hydroxyethylcellulose, Hydroxypropylcellulose oder Hydroxypropylmethylcellulose, ferner synthetische Polymere, wie Polyvinylalkohol oder Polyacrylate, sowie biosynthetische Polymere, wie Xanthan Gum.

Überraschenderweise wurde nun gefunden, daß die Stabilität solcher Entschäumeremulsionen durch Zusatz ausgewählter linearer Polyurethane besonders wirksam erhöht werden kann, wobei unerwartet darüber hinaus deutlich zusätzliche Verbesserungen der anwendungstechnischen Eigenschaften beobachtet werden können.

Gegenstand der vorliegenden Erfindung ist deshalb Entschäumeremulsion vom Typ O/W, deren innere Phase den entschäumenden Wirkstoff und deren äußere wäßrige Phase einen Emulgator oder ein Emulgatorengemisch und mindestens ein wasserlösliches oder wasserdispergierbares lineares Polyurethan der allgemeinen Formel 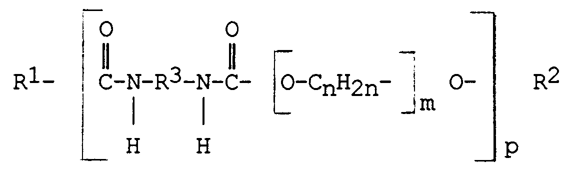 wobei
- R¹: ein Alkyloxyrest mit 1 bis 4 Kohlenstoffatomen, ein NH₂-Rest, dessen Wasserstoffreste teilweise oder ganz durch Alkylreste ersetzt sein können, ein Polyetherrest der Formel R⁴(OCᵣH₂ᵣ)ₛO-, wobei r eine Zahl von 2 bis 4, s eine Zahl von 5 bis 200 und R⁴ eine Alkylgruppe mit 1 bis 4 Kohlenstoffatomen ist,
- R²: ein Alkylrest mit 1 bis 4 Kohlenstoffatomen, ein Acylrest, ein Polyetherrest der Formel (CᵣH₂ᵣO)ₛR⁴, wobei r eine Zahl von 2 bis 4, s eine Zahl von 5 bis 200 und R⁴ eine Alkylgruppe mit 1 bis 4 Kohlenstoffatomen ist, oder ein Rest der Formel 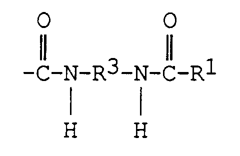
- R³: ein Alkylenrest mit 2 bis 10 Kohlenstoffatomen oder ein gegebenenfalls substituierter Arylenrest ist,
- n: eine Zahl von 2 bis 4,
- m: eine Zahl von 5 bis 200 und
- p: eine Zahl von 5 bis 200 ist,
in Mengen von 0,1 bis 5,0 Gew.-%, bezogen auf wäßrige Phase, als emulsionsstabilisierendes Schutzkolloid gelöst oder dispergiert enthält.

Bezeichnet man die Diolkomponente mit A, die Diisocyanatkomponente mit B, so ergibt sich aus den Bedeutungen der Endgruppen R¹ und R², daß das lineare wasserlösliche oder wasserdispergierbare Polyurethan vom Typ (AB)ₚ, (AB)ₚA und (BA)ₚB sein kann, wobei p wie oben definiert ist.

Um die Wasserlöslichkeit bzw. Wasserdispergierbarkeit der linearen Polyurethane sicherzustellen, müssen die Polyetherblöcke genügende Mengen an Oxyethylen- und gegebenenfalls Oxypropyleneinheiten enthalten. Besonders bevorzugt sind deshalb Verbindungen, bei denen n einen Wert von 2 bis 2,7, insbesondere einen Wert von 2 hat.

R³ ist vorzugsweise eine Alkylengruppe mit 2 bis 6 Kohlenstoffatomen, wie die Gruppe -(CH₂)₂-, -(CH₂)₃- oder -(CH₂)₆-, oder ein gegebenenfalls substituierter Arylenrest, insbesondere der Rest

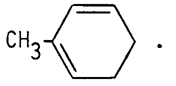

Der Index m gibt die Anzahl der Oxyalkyleneinheiten an und hat einen Wert von 5 bis 200, vorzugsweise 5 bis 100.

Der Index p ist Maß für die Anzahl der linearen Polyurethaneinheiten und bestimmt das Molekulargewicht des linearen Polyurethans. p hat dabei einen Wert von 5 bis 200, vorzugsweise 10 bis 70. Hieraus resultiert, je nach dem Wert der Indices n und m, ein durchschnittliches Molekulargewicht von 2000 bis 2 400 000.

Beispiele geeigneter erfindungsgemäß enthaltener Polyurethane sind

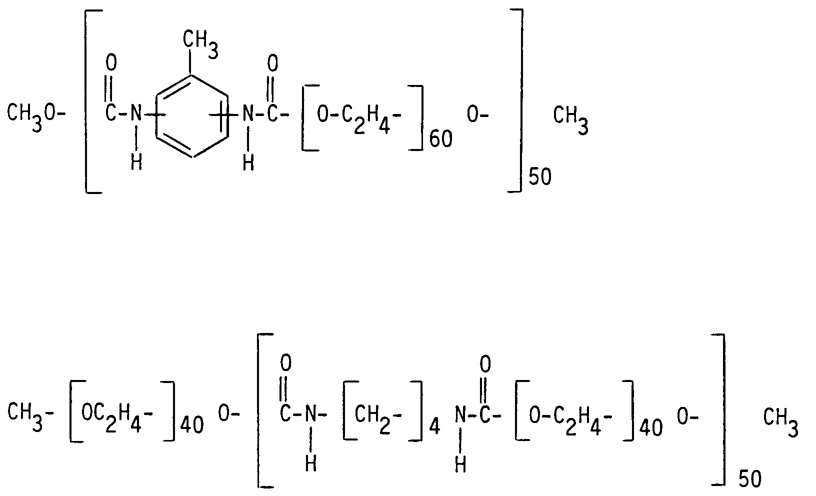

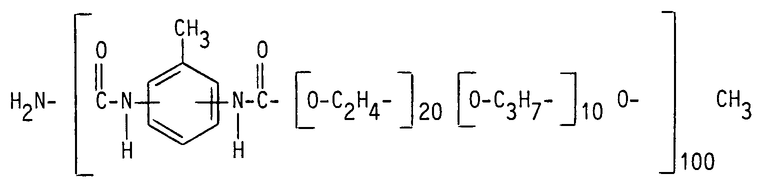

Eine erfindungsgemäße Entschäumeremulsion kann wie folgt zusammengesetzt sein: (Angaben in Gew.-%)

### Emulsion 1 (erfindungsgemäß):

- 21,0: Wasser
- 5,0: handelsüblicher Emulgatoren, wie POE-Triglyceride oder polyoxyethylierte höherkettige Alkohole
- 19,5: eines organisch modifizierten Siloxans
- 0,5: einer handelsüblichen, hydrophoben Kieselsäure
- 22,5: einer wäßrigen 0,5 %igen Polyacrylamidlösung
- 30,0: einer wäßrigen 4,5 %igen Lösung eines linearen Polyurethans
- 1,5: einer Lösung eines üblichen Konservierungsmittels

### Emulsion 2 (erfindungsgemäß):

- 56,0: Wasser
- 9,5: Siliconöl mit einer Viskosität von 1000 cp
- 0,5: einer handelsüblichen, hydrophoben Kieselsäure
- 4,0: handelsüblicher Emulgatoren, wie POE-Triglyceride oder polyoxyethylierte höherkettige Alkohole
- 30,0: einer wäßrigen 4,5 %igen Lösung eines linearen Polyurethans

Die erfindungsgemäßen Entschäumeremulsionen weisen insbesondere die folgenden verbesserten anwendungstechnischen Eigenschaften auf:
höhere Stabilität gegen äußere Scher- sowie Stoß- und Pralleinwirkungen;
höhere Wärme-/Kältebeständigkeit;
höhere Verdünnungsstabilität;
höhere Stabilität in Tensidkonzentraten;
keine Störanfälligkeit in wäßrigen Überdrucklacken;
keine Krater oder Koagulationen in Dispersionen oder Klarlacken, die auf einer Basis eines Gemisches von Acrylaten und Urethanen formuliert sind;
bessere Entschäumung in Reinacrylat- und Acrylatcopolymerdispersionen;
bessere Entschäumung in Tensidformulierungen.

Dabei war es überraschend, daß die verbesserten Eigenschaften nur dann beobachtet werden, wenn die Polyurethane linearen Aufbau haben und die Eigenschaften nicht verbessert werden, wenn die Polyurethane verzweigte Struktur aufweisen.

Die erfindungsgemäßen Entschäumeremulsionen können in an sich bekannter Weise zur Entschäumung von Tensidlösungen, Tensidkonzentraten, SBR-Latices, Reinacrylatdispersionen (z.B. für Papierbeschichtungen, Klebstoffe, Dispersionsfarben, Überdruckfarben), Styrolacrylatcopolymeren oder Acrylat-Urethanmischungen (z.B. für Papierbeschichtungen, Dispersionsfarben), wasserlöslichen Acrylatharzlösungen (z.B. für Überdrucklacke) verwendet werden.

In den folgenden Beispielen werden die Eigenschaften der erfindungsgemäßen Entschäumeremulsionen 1 und 2 noch näher gezeigt. Zum Vergleich dienen die analog zusammengesetzten Entschäumeremulsionen 3 und 4, die frei von linearen Polyurethanen sind.

### Emulsion 3 (nicht erfindungsgemäß, analog erfindungsgemäßer Emulsion 1):

- 21,0: Wasser
- 5,0: handelsüblicher Emulgatoren, wie POE-Triglyceride oder polyoxyethylierte höherkettige Alkohole
- 19,5: eines organisch modifizierten Siloxans
- 0,5: einer handelsüblichen, hydrophoben Kieselsäure
- 52,5: einer wäßrigen 0,5 %igen Polyacrylamidlösung
- 1,5: einer Lösung eines üblichen Konservierungsmittels

### Emulsion 4 (nicht erfindungsgemäß, analog erfindungsgemäßer Emulsion 2):

- 56,0: Wasser
- 9,5: Siliconöl mit einer Viskosität von 1000 cp
- 0,5: einer handelsüblichen, hydrophoben Kieselsäure
- 4,0: handelsüblicher Emulgatoren, wie POE-Triglyceride oder polyoxyethylierte höherkettige Alkohole
- 30,0: einer wäßrigen 0,5 %igen Polyacrylamidlösung

### Beispiel 1

### Nachweis höherer Stabilität gegen äußere Scher- sowie Stoß- und Pralleinwirkungen

In einer Schüttelmaschine werden 80 ml der erfindungsgemäßen Entschäumeremulsion 1 sowie einer nicht erfindungsgemäßen Entschäumeremulsion 3 in einer 100 ml fassenden Glasflasche bei einer Einstellung von 75 % geschüttelt. Im Abstand von 30 min werden Proben der zu prüfenden Entschäumeremulsionen entnommen und mit einer Konzentration von 1 % in eine 80 %ige Verdünnung einer Reinacrylatdispersion (im Handel erhältlich unter der Bezeichnung Dilexo AM 15) eingearbeitet. In diese entschäumerhaltige Polymerdispersion wird danach mit Hilfe einer Turbine (Durchmesser = 4 cm) bei einer Umfangsgeschwindigkeit von 5,2 m/sek 1 min lang Luft eingerührt. Im Anschluß wird die entschäumerhaltige Polymerdispersion auf eine Polyesterfolie abgegossen. Die jeweilige Qualität des so erhaltenen Polymerfilms verschlechtert sich mit der Dauer der Schütteleinwirkung auf die zu prüfenden Entschäumeremulsionen und ist ein Maß für die Schüttelstabilität. Es wird die Schütteldauer gemessen, ab der deutliche Oberflächenstörungen (Krater) in den Polymerfilmen auftreten.

| | Schütteldauer [min] |
|---|---|
| Emulsion 1 erfindungsgemäß | 360 |
| Emulsion 3 nicht erfindungsgemäß | 30 |

### Beispiel 2

### Nachweis höherer Wärme-/Kältebeständigkeit

Eine erfindungsgemäße, lineare Polyurethane enthaltende Entschäumeremulsion 2 sowie eine nicht erfindungsgemäße, Polyacrylamidverdicker enthaltende Entschäumeremulsion 4 werden 24 h bei -18°C im Gefrierschrank gelagert. Danach werden beide Emulsionen bis zu einer Temperatur von 20°C aufgetaut und anschließend mit Wasser auf 10 % verdünnt. Bei der nicht erfindungsgemäßen Emulsion bilden sich spontan ein dicker Ölfilm und größere Aggregate von Kieselsäure. Die erfindungsgemäße Emulsion hingegen läßt sich ohne Probleme homogen verdünnen.

### Beispiel 3

### Nachweis höherer Stabilität in Tensidkonzentraten

Eine erfindungsgemäße Entschäumeremulsion 2 sowie eine nicht erfindungsgemäße Entschäumeremulsion 4 werden derart in verschiedene Tensidkonzentrate eingearbeitet, daß ihre Einsatzkonzentrationen jeweils 3 % betragen. Die Zeit bis zu auftretenden Separationserscheinungen wird gemessen.

| Tensid | Emulsion 2 erfindungsgemäß | Emulsion 4 nicht erfindungsgemäß |
|---|---|---|
| C₈-C₁₅-Sulfonat | > 7 Tage | < 3 Tage |
| Sucroseester | > 7 Tage | < 2 Tage |
| Phosphatester (40 %) | 4 Tage | > 1 Tag |

### Beispiel 4

### Nachweis besserer Entschäumung in Reinacrylat- und Acrylatcopolymerdispersionen

Eine erfindungsgemäße Entschäumeremulsion 1 sowie eine nicht erfindungsgemäße Entschäumeremulsion 3 werden in einer Konzentration von 0,25 % in folgende Polymerdispersionen eingearbeitet:
a) Reinacrylatdispersion 80 %ig (im Handel erhältlich unter der Bezeichnung Acronal A 603 von BASF),
b) Acrylatcopolymerdispersion 80 %ig (im Handel erhältlich unter der Bezeichnung Dilexo AM 15 von DEA),
c) Acrylatcopolymerdispersion (im Handel erhältlich unter der Bezeichnung Primal HG 74 von Rohm & Haas),
d) Acrylat-Urethandispersion (im Handel erhältlich unter der Bezeichnung APU 1023 von Alberdingk & Boley).

Anschließend wird in die entschäumerhaltigen Prüfdispersionen mit Hilfe einer Turbine (Durchmesser = 4 cm) bei einer Umfangsgeschwindigkeit von 5,2 m/sek 1 min lang Luft eingerührt. Sofort danach werden die Massen von 50 ml Prüfdispersion als Maß für die entschäumende Wirkung bestimmt.

| Dispersion | Masse [g] | |
|---|---|---|
| | Emulsion 1 erfindungsgemäß | Emulsion 3 nicht erfindungsgemäß |
| a | 47,1 | 45,3 |
| b | 48,3 | 47,3 |
| c | 49,1 | 47,3 |
| d | 49,3 | 47,3 |

### Beispiel 5

### Nachweis besserer Entschäumung in Tensidformulierungen

In ein 20 gew.-%iges nichtionisches Tensid werden 2 % einer erfindungsgemäßen Entschäumeremulsion 1 sowie einer nicht erfindungsgemäßen Entschäumeremulsion 3 eingearbeitet und mit Hilfe einer Turbine (Durchmesser = 4 cm) bei einer Umfangsgeschwindigkeit von 5,2 m/sek 1 min lang Luft eingerührt. Sofort danach werden die resultierenden Dichten als Maß für die entschäumende Wirkung gemessen.

| Blindwert | Emulsion 1 erfindungsgemäß | Emulsion 3 nicht erfindungsgemäß |
|---|---|---|
| 31,0 g/50 ml | 42,0 g/ 50 ml | 37,5 g/50 ml |

## Patentansprüche

1. Entschäumeremulsion vom Typ O/W, deren innere Phase den entschäumenden Wirkstoff und deren äußere wäßrige Phase einen Emulgator oder ein Emulgatorengemisch und mindestens ein wasserlösliches oder wasserdispergierbares lineares Polyurethan der allgemeinen Formel 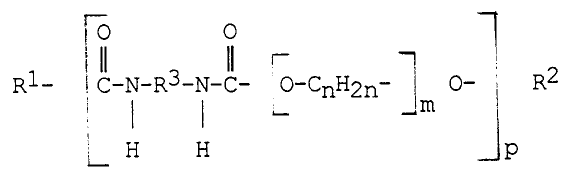 wobei
R¹ ein Alkyloxyrest mit 1 bis 4 Kohlenstoffatomen, ein NH₂-Rest, dessen Wasserstoffreste teilweise oder ganz durch Alkylreste ersetzt sein können, ein Polyetherrest der Formel R⁴(OCᵣH₂ᵣ)ₛO-, wobei r eine Zahl von 2 bis 4, s eine Zahl von 5 bis 200 und R⁴ eine Alkylgruppe mit 1 bis 4 Kohlenstoffatomen ist,
R² ein Alkylrest mit 1 bis 4 Kohlenstoffatomen, ein Acylrest, ein Polyetherrest der Formel (CᵣH₂ᵣO)ₛR⁴, wobei r eine Zahl von 2 bis 4, s eine Zahl von 5 bis 200 und R⁴ eine Alkylgruppe mit 1 bis 4 Kohlenstoffatomen ist, oder ein Rest der Formel 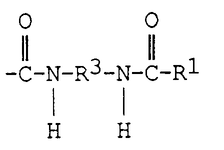
R³ ein Alkylenrest mit 2 bis 10 Kohlenstoffatomen oder ein gegebenenfalls substituierter Arylenrest ist,
n eine Zahl von 2 bis 4,
m eine Zahl von 5 bis 200 und
p eine Zahl von 5 bis 200 ist,
in Mengen von 0,1 bis 5,0 Gew.-%, bezogen auf wäßrige Phase, als emulsionsstabilisierendes Schutzkolloid gelöst oder dispergiert enthält.

2. Entschäumeremulsion nach Anspruch 1, dadurch gekennzeichnet, daß in der allgemeinen Formel die Indices
n = 2,
m eine Zahl von 5 bis 100,
p eine Zahl von 10 bis 70 sind.

## Claims

1. Defoamer emulsion of the O/W type, whose inner phase comprises the active defoaming substance and whose outer, aqueous phase comprises an emulsifier or an emulsifier mixture and, in dissolved or dispersed form, at least one water-soluble or water-dispersible linear polyurethane of the general formula 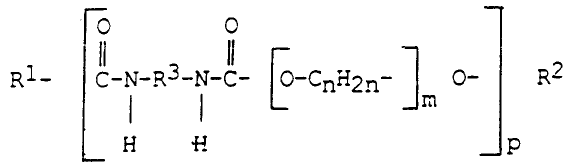 where
R¹ is an alkyloxy radical having 1 to 4 carbon atoms, an NH₂ radical of which either or both hydrogens may be replaced by alkyl radicals, or a polyether radical of the formula R⁴(OCᵣH₂ᵣ)ₛO-, where r is a number from 2 to 4, s is a number from 5 to 200 and R⁴ is an alkyl group having 1 to 4 carbon atoms,
R² is an alkyl radical having 1 to 4 carbon atoms, an acyl radical, a polyether radical of the formula (CᵣH₂ᵣO)ₛR⁴, where r is a number from 2 to 4, s is a number from 5 to 200 and R⁴ is an alkyl group having 1 to 4 carbon atoms, or a radical of the formula 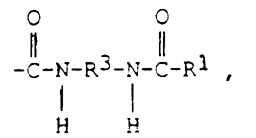
R³ is an alkylene radical having 2 to 10 carbon atoms or a substituted or unsubstituted arylene radical,
n is a number from 2 to 4,
m is a number from 5 to 200, and
p is a number from 5 to 200,
in quantities of from 0.1 to 5.0% by weight, based on aqueous phase, as emulsion-stabilizing protective colloid.

2. Defoamer emulsion according to Claim 1, characterized in that in the general formula the indices are defined as follows:
n = 2,
m is a number from 5 to 100, and
p is a number from 10 to 70.

## Revendications

1. Emulsion antimoussante du type huile dans eau, dont la phase interne contient le principe actif antimoussant et dont la phase aqueuse externe contient un émulsifiant ou un mélange d'émulsifiants et au moins un polyuréthane linéaire soluble dans l'eau ou dispersible dans l'eau, répondant à la formule générale 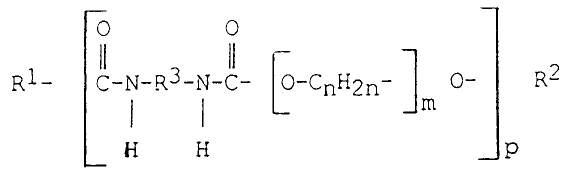 où
R¹ est un reste alkyloxy ayant de 1 à 4 atomes de carbone, un reste NH₂ dont les restes d'hydrogène peuvent être remplacés en totalité ou en partie par des restes alkyles, un reste polyéther répondant à la formule R⁴(OCᵣH₂ᵣ)ₛO-, où r est un nombre de 2 à 4, s est un nombre de 5 à 200, et R⁴ est un groupe alkyle ayant de 1 à 4 atomes de carbone,
R² est un reste alkyle ayant de 1 à 4 atomes de carbone, un reste acyle, un reste polyéther répondant à la formule (CᵣH₂ᵣO)ₛR⁴, où r est un nombre de 2 à 4, s est un nombre de 5 à 200, et R⁴ est un groupe alkyle ayant de 1 à 4 atomes de carbone, ou un reste répondant à la formule 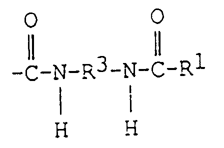
R³ est un reste alkylène ayant de 2 à 10 atomes de carbone ou un reste arylène éventuellement substitué,
n est un nombre de 2 à 4,
m est un nombre de 5 à 200, et
p est un nombre de 5 à 200,
en des quantités de 0,1 à 5,0 % en poids par rapport à la phase aqueuse, comme colloïde protecteur stabilisant l'émulsion, à l'état dissous ou dispersé.

2. Emulsion antimoussante selon la revendication 1, caractérisée en ce que, dans la formule générale, l'indice n = 2, l'indice m est un nombre de 5 à 100, et l'indice p est un nombre de 10 à 70.
